# EUROPEAN PATENT APPLICATION

(11) **EP 2 214 290 A2**
(43) Date of publication of application: **04.08.2010**
(21) Application number: 10000825.9
(22) Date of filing: 27.01.2010
(51) Int. Cl.: H02K 1/27

(54) **Rare-earth permanent magnet electric motor rotor**

(30) Priority: 30.01.2009 JP 2009020913
(71) Applicant: TDK Corporation, Tokyo 103-8272 (JP); Honda Motor Co., Ltd., Minato-ku Tokyo 107-8556 (JP)
(72) Inventor: Hagiwara, Jun, Tokyo 103-8272 (JP); Nagai, Takeshi, Tokyo 103-8272 (JP); Komatsu, Toshiyasu, Saitama-ken 351-0113 (JP); Shintani, Yasutaka, Saitama-ken 351-0113 (JP); Kubota, Makoto, Saitama-ken 351-0113 (JP); Nishiyama, Tadao, Saitama-ken 351-0113 (JP); Okada, Hidenori, Saitama-ken 351-0113 (JP)
(74) Representative: Glawe, Delfs, Moll

(57) **Abstract**

There is provided a rare-earth permanent magnet optimized to an IPM type motor for a car, capable of improving corrosion resistance, abrasion resistance, and impact resistance. The rare-earth permanent magnet 16 is configured by forming an electroplated Ni coating film 21, of which thickness is 15 µm or more and 30 µm or less and of which shape is a columnar crystal structure, on a surface of a R-Fe-B system permanent magnet (R is a rare-earth element) 22. The electroplated Ni coating film 21 has a high hardness region, where the Vickers hardness is 300 or more and 600 or less, and a low hardness region, where the Vickers hardness is 150 or more and 300 or less. The rare-earth permanent magnet 16 is used in a state where the rare-earth permanent magnet 16 is inserted into a slot of a yoke in a rotor of an IPM type motor for a car.

## Description

### BACKGROUND OF THE INVENTION

### -- Field of the Invention

The present invention relates to a rare-earth permanent magnet that is inserted into a slot in a rotor yoke of an IPM type motor for a car.

### --Description of Related Art

As a rare-earth permanent magnet, an R-Fe-B system rare-earth permanent magnet (R is a rare-earth element) is known well. The R-Fe-B system rare-earth permanent magnet is, as a high quality permanent magnet, used for an electric car or a hybrid car which require such a high quality. However, since the R-Fe-B system rare-earth permanent magnet contains as main constituents the rare-earth element and the iron which are easily oxidized, there is a problem in that the corrosion resistance thereof is relatively low and deterioration and deviation in magnetic characteristics caused by corrosion.

In addition, as the motor for the electric car or hybrid car requires high performance, an interior permanent magnet (IPM) type motor is adopted in many cases. The IPM type motor has a rotor structure, where a magnet is inserted into a slot provided inside a yoke that is formed by laminating silicon steel sheets. Since the yoke is manufactured by laminating punched silicon steel sheets, unevenness such as blur or a scratch of a punching blade may occur on a surface of the slot. Therefore, when the R-Fe-B system permanent magnet, of which surface is coated with a corrosion resistant layer, is inserted into the slot, the layer may be scratched by the unevenness.
As a result, there is a problem in the corrosion resistance of the magnet, so that the magnetic characteristics and the characteristics of the motor may deteriorate. In addition, since the rotation of the IPM type motor reaches 6000 rpm or more, a large centrifugal force as well as a large magnetic attractive force of the magnet is exerted to the magnet in the slot during the rotation.

Therefore, the magnet is moved in the radial direction in the slot, so that the magnet may collide with the yoke. As a result, there is also a problem in that the coated layer is scratched or abraded and crack occurs in the coated layer.

For this reason, in a surface treatment of the R-Fe-B system permanent magnet of the IPM type motor for a car, abrasion resistance (a property of not being easily abraded) and impact resistance (a property of not being easily cracked) as well as corrosion resistance (a property of not being easily corroded) are needed.

In order to improve the corrosion resistance, the abrasion resistance, and the impact resistance, there are proposed technologies of forming a protective layer constructed with an oxidation resistant metal or the like on the surface of the rare-earth permanent magnet. For example, Japanese Patent Application Laid-Open (JP-A) No. 9-7810 discloses a laminated coated layer formed by combining a low-hardness non-bright Ni coating film and a high-hardness bright Ni coating film in order to improve the corrosion resistance and secure the abrasion resistance. In addition, Japanese Patent Application Laid-Open (JP-A) No. 2003-97429 discloses an Ni-P coated layer having the Vickers hardness of about 690 to 820 formed on a surface of an iron system sintered material in order to improve the abrasion resistance of the iron system sintered material.

However, the rare-earth permanent magnets disclosed in JP-A Nos. 9-7810 and 2003-97429 cannot simultaneously satisfy all the corrosion resistance, the abrasion resistance, and the impact resistance. Therefore, a rare-earth permanent magnet satisfying all the requirements is needed.

### SUMMARY

The present invention is to provide a rare-earth permanent magnet optimized to an IPM type motor for a car, capable of improving corrosion resistance, abrasion resistance, and impact resistance.

According to an embodiment of the present invention, there is provided a rare-earth permanent magnet which is inserted into a slot in a rotor yoke in an IPM type motor for a car, wherein a single-layer electroplated Ni coating film having a thickness of 15 µm or more and 30 µm or less is formed on a surface of an R-Fe-B system permanent magnet (R is a rare-earth element), wherein the electroplated Ni coating film has a high hardness region, wherein the Vickers hardness is 300 or more and 600 or less, and a low hardness region, where the Vickers hardness is 150 or more and 300 or less, and where the high hardness region and the low hardness region are mixedly disposed in a two dimensional plane.

In the present invention, it is preferable that the Vickers hardness in the high hardness region is 350 or more and 600 or less, and the Vickers hardness in the low hardness region is 150 or more and 250 or less.
According to the structure, a high performance coated layer having a function as an impact-absorbing material and a function as an abrasion resistant material having high hardness and excellent slidability may be implemented.

In the present invention, it is preferable that the electroplated Ni coating film has a columnar crystal structure. Due to the crystal structure, a portion of the grain boundary of the magnet base body, which has large grains and rough surface, can be securely covered, so that the pinhole can be securely buried.

In this manner, according to the present invention, the electroplated Ni coating film having a function as an impact-absorbing material and a function as an abrasion resistant material having a high hardness and an excellent slidability is formed on a surface of the rare-earth permanent magnet. Therefore, even in a case where the rare-earth permanent magnet is used being inserted into a slot of a yoke in a rotor of an IPM type motor for a car, an exposure of a base of a magnet caused by a scratch of the coated layer and crack of the coated layer can be suppressed, which allows excellent corrosion resistance, abrasion resistance and impact resistance to be provided to the magnet.

### BRIEF DESCRIPTION OF THE DRAWINGS

The above features and advantages of the present invention will be more apparent from the following description of certain preferred embodiments taken in conjunction with the accompanying drawings, in which:
FIG. 1 is an exploded perspective view illustrating a configuration of an IPM type motor employing a rare-earth permanent magnet according to the present invention;
FIG. 2 is a front view illustrating main portions of the IPM type motor;
FIG. 3 is a schematic sectional view illustrating a structure of a rare-earth permanent magnet according to an embodiment of the present invention; and
FIG. 4 is a schematic view illustrating a distribution of the Vickers hardness in the section of the protective layer.

### DETAILED DESCRIPTION OF THE EMBODIMENTS

Preferred embodiments of the present invention will be explained below in detail with reference to the accompanying drawings.

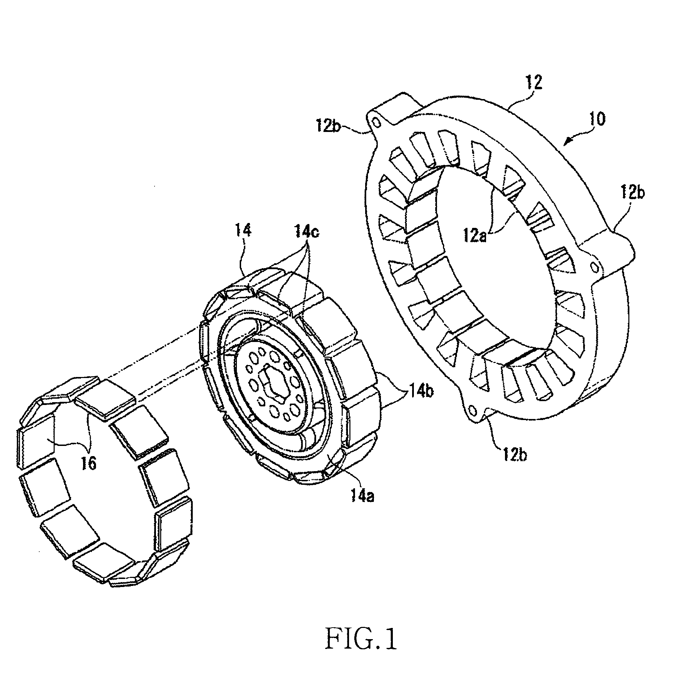

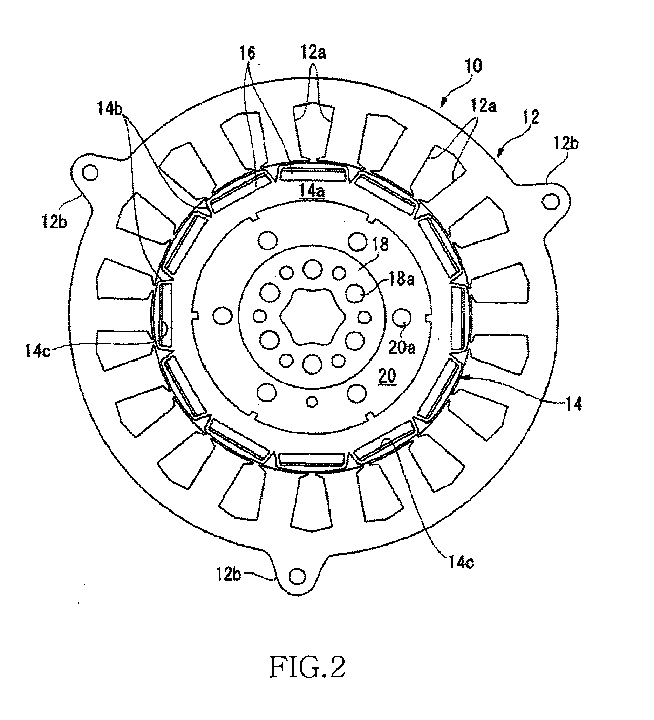

FIG. 1 is an exploded perspective view illustrating a configuration of an IPM type motor employing a rare-earth permanent magnet according to the present invention. FIG. 2 is a front view illustrating main portions of the IPM type motor.

As shown in FIG. 1, the IPM type motor 10 includes a stator 12 and a rotor 14 that is disposed inside the stator 12. The rotor 14 includes yoke 14a and rare-earth permanent magnets 16 that are disposed in the yoke 14a.

A plurality of stator magnetic poles 12a is disposed to protrude from the inner circumference of the stator 12 toward the center of the stator 12. A coil (not shown) is fitted into each of the stator magnetic poles 12a. Protrusions 12b are disposed to protrude from the outer circumference of the stator 12. Each of the protrusions 12b is fixed to a housing (not shown) by inserting a bolt (not shown) into a hole punctured therein.

The yoke 14a of the rotor 14 is constructed by laminating a plurality of silicon steel sheets. A plurality of rotor magnetic poles 14b is disposed to protrude from the rotor 14 so as to face the stator magnetic poles 12a. A magnet insertion slot 14c is formed in each of the rotor magnetic poles 14b through puncturing. The rare-earth permanent magnet 16 is disposed in inner side of the slot 14c in the radial direction of the rotor.

The IPM type motor 10 according to the embodiment is constructed with a thin, inner rotor type brushless motor. Bolt engaging portions 18a (shown in FIG. 2) of a mounting surface 18 at the central side of the rotor 14 are bolt-engaged with an end of a crank shaft (not shown) of an engine of a car, and bolt engaging portions 20a (shown in FIG. 2) of a mounting surface 20 at the circumferential side of the rotor 14 are bolt-engaged with a transmission (not shown), so that the motor is used as a driving source of a hybrid car.

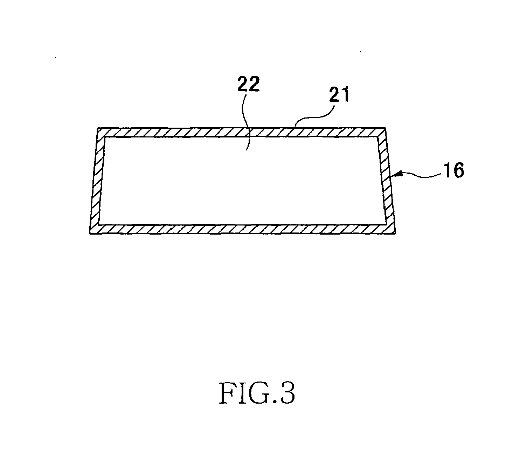

FIG. 3 is a schematic sectional view illustrating a structure of a rare-earth permanent magnet 16 according to an embodiment of the present invention.

As shown in FIG. 3, the rare-earth permanent magnet 16 is formed in an approximately plate shape, wherein a protective layer 21 is disposed on the approximately entire surface thereof. The protective layer 21 is constructed with a single-layered metal plated coating film. The metal plated coating film has a polycrystalline structure and preferably has a columnar crystal structure. This is because, by use of the metal plated coating film having the columnar crystal structure, high corrosion resistance can be obtained.

The columnar crystal are preferably grown in the radial direction. According to the structure, in the case where the crystal grain boundary is relatively complicatedly intersected, it is possible to suppress extraneous corrosion material diffused through the grain boundary. With respect to the size of the columnar crystal, it is preferable that an average long-directional diameter is 2 µm or more, and an average short-directional diameter is 1 µm or less. Since a grain diameter of a sintered alloy in the powder metallurgical process such as the magnet base body 22 is coarse, some coating film may not cover the grain boundary portion of the magnet base body 22 (in other words, the pinhole may not be buried). However, since the coating film having the columnar crystal structure is grown in electro-crystallization densely, such a coating film is suitable for burying the pinhole.

In addition, a thickness of the protective layer 21 is preferably 15 to 30 µm. If the thickness is smaller than 15 µm, pinhole may not be buried, and sufficient corrosion resistance may not be obtained. If the thickness exceeds 30 µm, the thickness greatly influences dimension accuracy, and effective magnetic characteristics may not be obtained. Accordingly, cost and/or a film deposition time may be increased.

In addition, the Vickers hardness of the protective layer 21 in the planar direction in the same layer is preferably 300 or more and 600 or less, that is, in a high hardness region, more preferably, 350 or more and 600 or less. Due to the high hardness region, a high abrasion resistance in the entire protective layer can be obtained. In addition, if the Vickers hardness is 600 or more, the hardness in the entire protective layer is high, so that the protective layer 21 may be easily cracked or peeled off. Accordingly, the impact resistance is decreased.

In addition, the Vickers hardness of the protective layer 21 in the planar direction in the same layer is preferably 150 or more and 300 or less, that is, in a low hardness region, more preferably, 150 or more and 250 or less. Due to the flexibility in the low hardness region, impact can be alleviated, so that a high impact resistance can be obtained. In addition, if the Vickers hardness is 150 or less, the protective layer 21 is too soft, so that the deformation greatly occurs by the impact. Accordingly, the abrasion amount and abrasion speed of the protective layer are increased.

The protective layer 21 is preferably made of nickel. Due to the nickel, high corrosion resistance, abrasion resistance, and impact resistance can be obtained.

The protective layer 21 is preferably formed by electroplating. A plating bath may be selected according to a desired plated layer. At this time, by adjusting a type of the plating bath and a current density at the time of plating, an average crystal grain diameter of the protective layer 21 and a shape of the crystal thereof can be controlled. For example, by applying an higher voltage, the current density may be 0.3 A/dm² or more and 10 A/dm² or less; and by adding a suitable brightening agent, the protective layer 21 may be configured to have a fine crystal. In addition, for example, the current density may be 0.01 A/dm² or more and 0.3 A/dm² or less; and by adding a suitable brightening agent, the protective layer 21 may be configured to have a columnar crystal structure.

As an example of the brightening agent for plating, an semi-brightening additive agent or a brightening additive agent may be used as needed. As an example of the semi-brightening additive agent, there is an organic material containing no sulfur such as butynediol, coumalin, propagyl alcohol, or formalin. In addition, among the brightening additive agent, as an example of a primary brightening agent, there is saccharin, 1,5-Naphthalene disulfonic acid sodium, 1,3,6-Naphthalene trisulfonic acid trisodium, para toluene sulfonamide, or the like. As an example of a secondary brightening agent, there is coumalin, 2-butyne 1,4-diol, ethylene cyanohydrin, propagyl alcohol, formaldehyde, thiourea, quinoline, pyridine, or the like.

As described above, in the rare-earth permanent magnet according to the embodiment, since the single-layered electroplated Ni coating film is formed on a surface of the rare-earth permanent magnet, even in the case where the rare-earth permanent magnet is inserted into the slot of the yoke 14a in the rotor 14 of the IPM type motor 10, an exposure of a base of a magnet caused by a scratch of the coated layer and occurrence of crack in the coated layer can be suppressed. Accordingly, excellent corrosion resistance, abrasion resistance and impact resistance can be provided to the magnet. Particularly, according to the present invention, since the region having high Vickers hardness (Hv, 300 to 600) and the region having low Vickers hardness (Hv, 150 to 300) are simultaneously disposed on the same layer, a high performance coated layer having a function as an impact-absorbing material and a function as an abrasion resistant material having high hardness and excellent slidability can be implemented. In addition, according to the present invention, since the Ni plated coated layer has a columnar crystal structure, a portion of the grain boundary of the magnet base body 22, which has large grains and rough surface, can be securely covered, so that the pinhole can be securely buried.

### Example

An Nd-Fe-B sintered body formed by using a powder metallurgical process is subjected to a thermal treatment at 600°C for two hours in an argon atmosphere, and the resulting product is shaped in a size of 15×40×8 (mm) and subjected to chamfering through a barrel grinding process, so that a magnet base body is obtained. Next, after the magnet base body is rinsed with a defatted alkaline solution, the surface thereof is activated by a nitric acid solution, and after that, is cleaned with water.

Subsequently, a protective layer having a thickness of 20 µm, which is constructed with a nickel plated film, is formed on the surface of the magnet base body by electroplating. At this time, by using a barrel plating process, in a plating bath, nickel sulfate 6-hydrate is adjusted to be 240 g/L; nickel chloride 6-hydrate is adjusted to be 50 g/L; boric acid is adjusted to be 30 g/L; 2-butyne 1,4-diol is adjusted to be 0.5 g/L; and pH is adjusted to be 4.5. In addition, a temperature of the solution is adjusted to be 50°C, and an average current density is adjusted to be in a constant value of 0.3 A/dm². As a result, a rare-earth permanent magnet (Sample 1) according to the example 1 is obtained.

### Comparative Example 1

A rare-earth permanent magnet of Comparative Example 1 is obtained by using the same processes as those of the example 1 except for the following processes. In other words, a protective layer having a thickness of 20 µm, which is constructed with a nickel plated film, is formed by electroplating. At this time, by using the barrel plating process, in a plating bath, nickel sulfate 6-hydrate is adjusted to be 240 g/L; nickel chloride 6-hydrate is adjusted to be 50 g/L; boric acid is adjusted to be 30 g/L; 2-butyne 1,4-diol is adjusted to be 0.5 g/L; saccharin is adjusted to be 1 g/L; and pH is adjusted to be 4.5. In addition, the temperature of the solution is adjusted to be 50°C, and the average current density is adjusted to be in a constant value of 1 A/dm². As a result, a rare-earth permanent magnet (Sample 2) according to Comparative Example 1 is obtained.

### Comparative Example 2

A rare-earth permanent magnet of Comparative Example 2 is obtained by using the same processes as those of the example 1 except for the following processes. In other words, a protective layer having a thickness of 20 µm, which is constructed with a nickel plated film, is formed by electroplating. At this time, by using the barrel plating process, in a plating bath, nickel sulfate 6-hydrate is adjusted to be 240 g/L; nickel chloride 6-hydrate is adjusted to be 50 g/L; boric acid is adjusted to be 30 g/L; and pH is adjusted to be 4.5. In addition, the temperature of the solution is adjusted to be 50°C, and the average current density is adjusted to be in a constant value of 0.1 A/dm². As a result, a rare-earth permanent magnet (Sample 3) according to Comparative Example 2 is obtained.

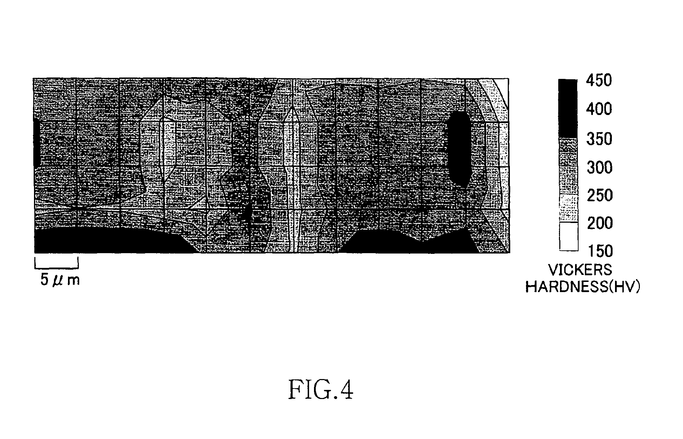

In Table 1, ratios of the region where the Vickers hardness is in a range of 150 to 300 and the region where the Vickers hardness is in a range of 300 to 600 in the section of the protective layer are listed by percentage. The values in parentheses represent average values of the Vickers hardness Hv. In addition, the Vickers hardness is measured by a nano indentation test in accordance with ISO14577. In addition, FIG. 4 illustrates a distribution of the Vickers hardness in the section of the protective layer. In FIG. 4, the upper portion represents the surface side, and the lower portion represents the base side of the magnet.

**Table 1**

| | Vickers Hardness | | Evaluation 1 | | |
|---|---|---|---|---|---|
| | 150-300 | 300-600 | Exposure of Base | Average Abrasion Amount | Maximum Abrasion Amount |
| Example 1 | 40%(250) | 60%(345) | Exposure of Base: non-occurrence | 5µm | 11µm |
| Comparative Example 1 | 0% | 100%(550) | Exposure of Base: occurrence | Occurrence of crack and peeling in Coated Layer | |
| Comparative Example 2 | 100%(215) | 0% | Exposure of Base: occurrence | 9µm | >20µm |

### Evaluation 1: Severe Impact Fatigue Test

A severe impact fatigue test, where energy of 1×10⁻⁴ to 3×10⁻⁴ J is applied to arbitrary two positions of the surface of the sample with 10⁷ to 10⁹ times, is performed on the samples. As a result, in the rare-earth permanent magnet Sample 1 according to the example 1, an average abrasion amount of the Ni plated protective layer is 5 µm, and a maximum abrasion amount thereof is 11 µm.

In the rare-earth permanent magnet Sample 2 according to Comparative Example 1, the abrasion amount of the Ni plated protective layer is in a range of about 2 to 3 µm. However, there are positions where the protective layer is cracked or peeled off, so that a portion of the magnet base body is exposed.

In the rare-earth permanent magnet Sample 3 according to Comparative Example 2, the average abrasion amount of the Ni plated protective layer is 9 µm, so that a portion of the magnet base body is exposed.

From the aforementioned results, it can be understood that the abrasion resistance and the impact resistance can be greatly improved by controlling a distribution of the hardness of the protective layer.

### Evaluation 2: Corrosion Resistance Test

A corrosion resistance test, where the rare-earth permanent magnet Sample is maintained for 72 hours in a thermo-hygrostat bath of 50°C × 95%, is performed on the samples 1 to 3. According to the result of the test, it is found out that, in any samples, no corrosion occurs, so that excellent corrosion resistance can be obtained.

## Claims

1. A rare-earth permanent magnet which is inserted into a slot in a rotor yoke in an IPM type motor for a car, comprising:
an R-Fe-B system permanent magnet (R is a rare-earth element); and
an electroplated Ni coating film having single-layer formed on the R-Fe-B system permanent magnet, the electroplated Ni coating film having a thickness of 15 µm or more and 30 µm or less,
wherein the electroplated Ni coating film has a high hardness region where the Vickers hardness is 300 or more and 600 or less, and a low hardness region where the Vickers hardness is 150 or more and 300 or less,
and wherein the high hardness region and the low hardness region are mixedly disposed in a two dimensional plane.

2. The rare-earth permanent magnet as claimed in claim 1, wherein the Vickers hardness in the high hardness region is 350 or more and 600 or less, and the Vickers hardness in the low hardness region is 150 or more and 250 or less.

3. The rare-earth permanent magnet as claimed in claim 1 or claim 2, wherein the electroplated Ni coating film has a columnar crystal structure.
